# EUROPÄISCHE PATENTSCHRIFT

(11) **EP 1 101 329 B1**
(45) Veröffentlichungstag und Bekanntmachung des Hinweises auf die Patenterteilung: **29.03.2006**
(21) Anmeldenummer: 99945925.8
(22) Anmeldetag: 06.07.1999
(51) Int. Cl.: H04L 12/46

(54) **BRÜCKENMODUL**
BRIDGE MODULE
MODULE DE PONTAGE

(30) Priorität: 28.07.1998 US 123825
(43) Veröffentlichungstag der Anmeldung: 23.05.2001
(73) Patentinhaber: Infineon Technologies AG, 81669 München (DE)
(72) Erfinder: BARRENSCHEEN, Jens, D-81669 München (DE); FENZL, Gunther, D-85635 Höhenkirchen-Siegertsbrunn (DE); VOWE, Achim, D-80469 München (DE)
(74) Vertreter: Schmuckermaier, Bernhard
(86) Internationale Anmeldenummer: PCT/DE1999/002087
(87) Internationale Veröffentlichungsnummer: WO 2000/007335

(56) Entgegenhaltungen:
- WO-A-97/10663
- DE-A- 19 758 032
- US-A- 5 633 865

## Beschreibung

Die Erfindung betrifft ein zwischen mindestens zwei Bussystemen geschaltetes Brückenmodul, das zum seriellen Datentransfer binärer Daten von einem der Bussysteme zu mindestens einem weiteren der Bussysteme geeignet ist.

Derartige Bussysteme können beispielsweise lokale Computernetzwerke sein. Bei solchen Busystemen bzw. lokalen Computernetzwerken, die zunehmend in der Kraftfahrzeugelektronik eingesetzt werden, kommuniziert eine Teilnehmersstation über einen Datenbus mit mindestens einer weiteren an demselben Datenbus angeschlossenen Teilnehmersstation. In der DE 35 06 118 ist als Beispiel eines solchen Bussystems ein sogenanntes Controller Area Network (CAN-Netzwerk) beschrieben.

Mit dem zunehmenden Bedarf an elektronischen Komponenten im Kraftfahrzeug ist es vorteilhaft, mehr als zwei lokale Bussysteme, beispielsweise mit unterschiedlich hohen Datenübertragungsraten, zu verwenden. Damit steigt naturgemäß auch der Bedarf, daß Teilnehmerstationen unterschiedlicher Bussysteme miteinander kommunizieren können. Zum Zwecke des Datentransfers zwischen unterschiedlichen Bussystemen kann beispielsweise ein sogenanntes Brückenmodul vorgesehen sein.

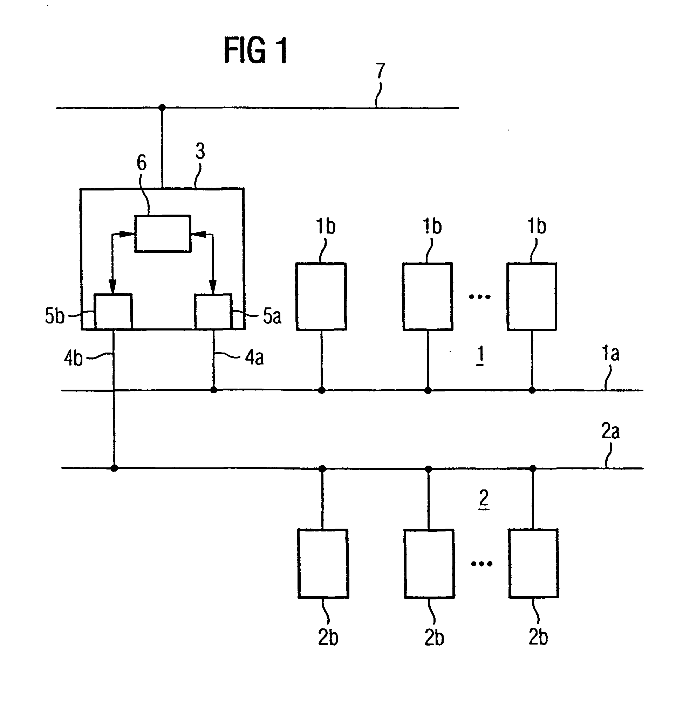

Ein Brückenmodul der eingangs genannten Art, das zum Datentransfer zwischen unterschiedlichen Bussystemen geeignet ist, ist in Jens Eltze, "Double CAN Controller as Bridge for Different CAN Networks", 4^{th} International Conference, Berlin, 10/1997, Seiten 15-17 bis 15-19 beschrieben. Dort ist insbesondere in Figur 1 eine technische Realisierung für ein programmierbares Brückenmodul dargestellt, das zum Zwecke des Datentransfers bzw. zur Datenfilterung zwischen den Teilnehmerstationen zweier CAN-Bussysteme angeordnet ist.

Das dort beschriebene programmierbare Brückenmodul weist eine ähnliche Charakteristik wie eine zentrale Recheneinheit (CPU) auf und erlaubt somit die Bearbeitung und Behandlung von Daten. Für die Bereitstellung einer zusätzlichen CPU zum Datentransfer bzw. zur Datenfilterung ist dort ein gesonderter Mikroprozessor notwendig. Ein zusätzlicher Mikroprozessor, der lediglich für den Datentransfer zwischen unterschiedlichen Bussystemen verwendet wird, ist jedoch äußerst kostenintensiv.

Desweiteren offenbart die WO-A-97 10663 ein Brückenmodul mit einer Steuerungseinheit und zwei FIFOS zum Datenstransfer.

Ausgehend von diesem Stand der Technik ist es daher die Aufgabe der vorliegenden Erfindung, ein Brückenmodul der eingangs genannten Art anzugeben, das auf einfache Weise einen Datentransfer zwischen mindestens zwei Bussystemen ermöglicht.

Erfindungsgemäß wird diese Aufgabe durch ein Brückenmodul der eingangs genannten Art dadurch gelöst, daß zur Zwischenspeicherung der Daten bei einem Datentransfer eine einzige Speichereinrichtung vorgesehen ist, wobei der Datentransfer in der Speichereinrichtung datengesteuert ohne Zwischenschaltung einer Steuereinrichtung erfolgt.

Der besondere Vorteil der vorliegenden Erfindung liegt somit in der Bereitstellung eines zwischen mindestens zwei unterschiedlichen Bussystemen angeordneten Brückenmoduls. Für den Datentransfer ist dabei eine einzige Speichereinrichtung vorgesehen, die der Zwischenspeicherung der Daten zwischen den unterschiedlichen Bussystemen dient. Der Datentransfer, der durch die zu übertragenden Daten gesteuert wird, erfolgt somit vollkommen automatisch, daß heißt ohne Zwischenschaltung einer zentralen Recheneinheit. Auf diese Weise läßt sich sehr einfach ein Modul angeben, welches für den Datentransfer zwischen unterschiedlichen Bussystemen geeignet ist.

Im Falle einer innerhalb des Brückenmoduls integrierten Speichereinrichtung ist dessen Speichergröße fest vorgegeben. Es ist daher besonders vorteilhaft, wenn das Brückenmodul als Bestandteil einer an einem der Bussysteme angeschlossenen Teilnehmerstation mitintegriert ist. In diesem Falle läßt sich der interne Speicher dieser Teilnehmerstation vorteilhafterweise auch als Speichereinrichtung des Brückenmoduls nutzen. In einer weiteren vorteilhaften Ausgestaltung läßt sich dann die Speichergröße der Speichereinrichtung je nach Anforderung beliebig erweitern bzw. verringern.

Die Erfindung ist dann besonders vorteilhaft, wenn das Brükkenmodul zum Zwecke des Datentransfers zwischen zwei Bussystemen, die mit unterschiedlich hohen Datenübertragungsraten betrieben werden, angeordnet ist. Bei sogenannten CAN-Bussystemen mit hohen Datenübertragungsraten von bis zu 1 MBit/s ist die Leitungslänge des Bussystemes auf 40 m begrenzt, während bei CAN-Bussystemen mit relativ niedriger Datenübertragungsrate die Leitungslänge auf bis zu 1000 m ausgedehnt werden kann, wobei hier nur eine Datenübertragungsrate von etwa 40 kBit/s möglich ist. Unter Verwendung des Brükkenmoduls lassen sich dann das "schnelle" und das "langsamen" Bussystem miteinander koppeln.

Darüberhinaus ist es besonders vorteilhaft, wenn mindestens ein Teil der Speichereinrichtung als FIFO-Speicher (First-In-First-Out-Speicher) konfiguriert ist. Ein solcher FIFO-Speicher eignet sich insbesondere zur Datenpufferung für einen Datentransfer zwischen den oben beschriebenen, unterschiedlich schnellen Bussystemen.

In einer bevorzugten Ausgestalltung ist das erfindungsgemäße Brückenmodul zwischen zwei CAN-Bussystemen in einem Kraftfahrzeugbordnetzsystemen angeordnet.

Vorteilhafte Ausgestaltungen und Weiterbildungen der Erfindung sind Kennzeichen der Unteransprüche.

Die Erfindung wird nachfolgend anhand der in den Figuren der Zeichnung angegebenen Ausführungsbeispiele näher erläutert. Es zeigt dabei:
- Figur 1: eine Prinzipdarstellung für ein erfindungsgemäßes Brückenmodul zum Datentransfer zwischen zwei Bussystemen;
- Figur 2: ein detailliertes Ausführungsbeispiel des erfindungsgemäßen Brückenmoduls, das in einer an einem der Bussysteme angeschlossenen Teilnehmerstationen integriert ist.

In den Figuren der Zeichnung sind gleiche oder funktionsgleiche Elemente, sofern dies nicht anders angegeben ist, mit gleichen Bezugszeichen versehen.

Figur 1 zeigt eine Prinzipdarstellung für ein erfindungsgemäßes Brückenmodul zum Datentransfer zwischen zwei Bussystemen.

In Figur 1 ist mit 1 ein erstes Bussystem bezeichnet. Das erste Bussystem enthält im vorliegenden Ausführungsbeispiel einen Datenbus 1a und eine Anzahl von an dem Datenbus 1a angeschlossener Teilnehmerstationen 1b. Darüber hinaus ist ein zweites Bussystem 2 bestehend aus einer Anzahl von an einem zweiten Datenbus 2a angeschlossener Teilnehmerstationen 2b dargestellt. Ein Brückenmodul 3 ist zwischen den Datenbussen 1a, 2a der beiden Bussysteme 1, 2 angeordnet. Das Brückenmodul 3 weist darüber hinaus eine erste und zweite Schnittstellenschaltung 5a, 5b auf. Das Brückenmodul 3 ist über die Schnittstellenschaltungen 5a, 5b und über Verbindungsleitungen 4a, 4b mit den entsprechenden Datenbussen 1a, 2a der Bussysteme 1, 2 verbunden. Darüber hinaus weist das Brückenmodul 3 eine einzelne Speichereinrichtung 6 auf, die jeweils mit jeder der Schnittstellenschaltungen 5a, 5b und somit mit jedem der Bussysteme 1, 2 verbunden ist.

Das Brückenmodul 3 ist vorteilhafterweise jedoch nicht notwendigerweise zusätzlich an einem weiteren Bus 7 angeschlossen. Über den fakultativ einen Daten-, Adreß- und Steuerbus enthaltenden weiteren Bus 7 kann das Brückenmodul 3 mit weiteren Modulen verbunden sein. Typischerweise ist jedoch das Brückenmodul 3 über den weiteren Bus 7 mit einer Recheneinrichtung, beispielsweise der zentralen Recheneinheit (CPU), verbunden.

Im vorliegenden Ausführungsbeispiel dient das Brückenmodul dem Datentransfer zwischen zwei Bussystemen 1, 2. Die vorliegende Erfindung ist jedoch nicht ausschließlich auf ein Brükkenmodul 3, das zwischen zwei Bussystemen 1, 2 geschaltet ist, begrenzt, sondern kann sich auf beliebig viele Brückenmodule 3, die zum Zwecke des Datentransfers zwischen beliebig vielen Bussystemen 1, 2 geschaltet sind, erstrecken.

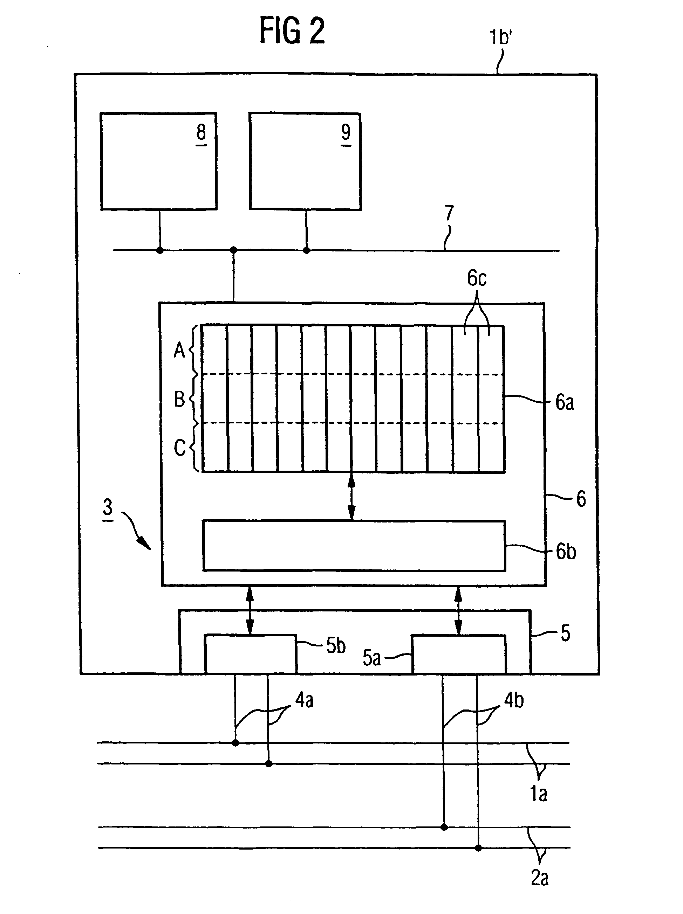

Figur 2 zeigt ein vorteilhaftes Ausführungsbeispiel des erfindungsgemäßen Brückenmoduls. Entsprechend Figur 1 zeigt auch Figur 2 zwei Bussysteme 1, 2, bei denen jeweils nur die Datenbusse 1a, 2a dargestellt sind. An jedem der Datenbusse 1a, 2a sind eine Vielzahl von Teilnehmerstationen 1b, 2b, die hier der besseren Übersicht wegen nicht dargestellt sind, angekoppelt.

Das Brückenmodul 3 in Figur 2 weist eine typischerweise als Zustandsapparat (State-Machine) ausgebildete Schnittstellenschaltung 5 auf. Die Schnittstellenschaltung 5 weist, wie im vorliegenden Ausführungsbeispiel angedeutet, eine erste und zweite Schnittstellenschaltung 5a, 5b für jeden der angeschlossenen Datenbusse 1a, 2a auf. Die Schnittstellenschaltungen in 5a, 5b enthalten die Kommunikationsprotokolle für die beiden angeschlossenen Datenbusse 1a, 2a.

Darüber hinaus weist die erfindungsgemäße Speichereinrichtung 6 des Brückenmoduls 3 einen physikalischen Speicher 6a sowie eine Speicherverwaltungseinrichtung 6b auf. Die Speichereinrichtung 6 ist über Verbindungsleitungen mit der Schnittstellenschaltung 5 und somit mit den am Brückenmodul 3 angeschlossenen Bussystemen 1, 2 verbunden. Die Speicherverwaltungseinrichtung 6b kann vorteilhafterweise als Co-Prozessor ausgebildet sein. Die Ausgestaltung der Speicherverwaltungseinrichtung 6b als Co-Prozessor weist gegenüber einer Festverdrahtung den Vorteil auf, daß der Datentransfer äußerst schnell und flexibel erfolgen kann. Allerdings muß ein solcher Co-Prozessor vorher erst programmiert werden und ist zudem sehr viel aufwendiger und somit kostenintensiver zu implementieren als eine Festverdrahtung.

Figur 2 zeigt eine bevorzugte Ausführungsform, bei der das Brückenmodul 3 in eines der an einem der Datenbusse 1a, 2a angeschlossenen Teilnehmerstationen 1b' integriert ist. Die das Brückenmodul 3 aufweisende Teilnehmerstation 1b' weist eine zentrale Recheneinheit 8 sowie einen typischerweise als RAM ausgebildeten internen Speicher 9 auf. Darüber hinaus kann eine Teilnehmerstation 1b' weitere Pheripheriemodule wie beispielsweise einen Analog-Digital-Wandler, Timer-Module, eine Interupt-Einrichtung, etc aufweisen. Die letztgenannten Module sind der besseren Übersicht wegen in der Teilnehmerstation 1b' in Figur 2 nicht dargestellt worden. Die einzelnen Module sind jeweils über den internen Bus 7 untereinander sowie mit der Speichereinrichtung 6 des Brückenmoduls 3 verbunden.

Der Speicher 6a des Brückenmoduls 3 ist typischerweise objektweise organisiert, d.h. der Speicher 6a besteht aus ist aus einer Vielzahl von Speicherobjekten 6c aufgebaut. Typischerweise, jedoch nicht notwendigerweise, weisen die verschiedenen Speicherobjekte 6c des Speichers 6a die gleiche Größe auf. Die einzelnen Speicherobjekte 6c des Speichers 6a sind in folgende Speicherobjektbereiche (A)-(C) unterteilt:
1. Der Identifizierbereich (A) enthält im wesentlichen die Kennung (Identifier) und Steuerinformation, mit welchem das jeweilige Speicherobjekt 6c auf den ihm zugeordneten Datenbus 1a, 2a zugreift. Für CAN-Anwendungen ist je nach Betriebsmodus der Identifizierbereich (A) 11 Bit bzw. 29 Bit breit.
2. Im Datenbereich (B) werden die zu transferierenden Daten zwischengespeichert. Dabei ist der Datenbereiches (B) mindestens so breit anzusetzen, wie die bei einem Datentransfer pro Datenpaket maximal übertragbare Datenmenge zu wählen. Bei CAN-Anwendungen ist die Breite des Datenbereiches (B)durch das Datenübertragungsprotokoll fest vorgegeben und beträgt maximal 8 Byte.
3. Der Steuerbereich (C) enthält die Kontroll- und Steuerfunktionen für den Datentransfer. Darin enthalten sind im wesentlichen Informationen über die Busarbitrierung eines Speicherobjektes 6c zu den angeschlossenen Bussystemen 1, 2 sowie die Art bzw. den Busbetriebsmodus des Datentransfers. Darüberhinaus enthält der Steuerbereich (6c) Daten zur allgemeinen Steuerung des Datentransfers. Bei CAN-Anwendungen ist die Größe des Steuerbereiches je nach Applikation variabel.

Die Speicherobjekte 6c des Speichers 6a können flexibel und individuell jedem der (beiden) angeschlossenen Bussysteme 1, 2 zugeordnet werden. Weist beispielsweise die Speichereinrichtung 6 32 Speicherobjekte 6c auf, dann können beispielsweise 20 Speicherobjekte 6c dem ersten Bussystem 1 und die übrigen 12 Speicherobjekte dem zweiten Bussystem 2 zugeordnet sein. Dabei ist selbstverständlich jede andere Zuordnung der Speicherobjekte 6c des Speichers 6a denkbar. Die Zuordnung kann flexibel von einem Anwender je nach den gegebenen Anforderungen über die zentrale Recheneinheit 8 wieder neu festgelegt werden. Auf diese Weise ist es möglich, eine flexible Funktionalität für den Datentransfer zwischen den an dem Brückenmodul 3 angekoppelten Bussystemen 1, 2 zu implementieren.

Die zentrale Rechenenheit 8 wird lediglich bei der Konfiguration der einzelnen Speicherobjekte 6c des Speichers 6a herangezogen. Darüberhinaus findet jedoch der oben beschriebene Datentransfer von einem Bussystem 1, 2 zu einem zweiten über das Brückenmodul 3 ganz ohne Zuhilfenahme der Rechenleistung der zentralen Recheneinheit 8 statt. Der Datentransfer erfolgt somit ausschließlich datengesteuert. Auf diese Weise wird die Rechenleistung der zentralen Recheneinheit nicht beeinträchtig, was zu keiner Verminderung der Leistungsfähigkeit der das Brückenmodul 3 enthaltenden entsprechenden Teilnehmerstation 1b' führt.

Für CAN-Anwendungen ist die Größe eines derartigen Speicherobjektes 6c abhängig von der Implementierung. Nachfolgend wird jedoch davon ausgegangen, daß die Speichergröße eines Speicherobjektes 6c 32 Byte beträgt. Ein Speicher 6a mit einem 1 KByte RAM weist somit typischerweise 32 Speicherobjekte 6c auf. Die Speichergröße ist dabei entsprechend dem zu erwartenden Datentransfer so ausgelegt, daß sie für den Normalbetrieb vollkommen ausreicht. Gegebenenfalls kann es aufgrund von zusätzliche Anforderungen zwischen den verschiedenen Bussystemen 1, 2 zu einem höheren Datentransfer als vorgesehen kommen. In diesem Fall kann der Speicher 6a des Brückenmoduls 3 zu klein dimensioniert sein. Es besteht hier dann der Bedarf von zusätzlichen Speicherplatzresourcen bzw. einer Speichererweiterung. Gleichermaßen kann unter Umständen auch der Bedarf seitens der zentralen Recheneinheit 8 nach einer Speichererweiterung aufgrund gesteigerter Prozessortätigkeiten bestehen.

Für den Fall, daß das Brückenmodul 3 entsprechend Figur 2 in einer der Teilnehmerstationen 1b' integriert ist, kann vorteilhafterweise ein einziger Speicher vorgesehen sein, der sowohl als interner Speicher 9 der zentralen Recheneinheit 8 der Teilnehmerstation 1b' als auch als Speicher 6a des Brükkenmoduls 3 dient (in Figur 2 nicht dargestellt). Die Speichergröße des Speichers 6a des Brückenmoduls 3 und der zentralen Recheneinheit 8 kann somit je nach Bedarf - im Rahmen der Gesamtgröße des gemeinsam genutzen Speichers - größer oder kleiner konfiguriert werden. Auf diese Weise ist eine optimierte Auslastung der bestehenden Speicherresourcen möglich und es werden keine neuen Speicherkomponenten benötigt.

Besonders vorteilhaft ist es, wenn mindestens ein Teil der Speicherobjekte 6c des Speichers 6a als FIFO-Speicher (First-In-First-Out-Speicher) ausgebildet sind. Dies ist insbesondere dann vorteilhaft, wenn die beiden am Brückenmodul angeschlossenen Bussysteme 1, 2 mit unterschiedlichen Datenübertragungsraten getrieben werden. In diesem Fall dient der FIFO-Speicher als Datenpuffer für die vom schnelleren Bussystem 1, 2 gesendeten Daten. Die Daten können anschließend vom langsameren Bussystem 1, 2 entsprechend ausgelesen werden. Umgekehrt ist selbstverständlich auch ein FIFO-Speicher als Datenpuffer zum Einlesen von Daten denkbar.

Die FIFO-Länge gibt die Gesamtzahl der einem FIFO zugeordneten Speicherobjekte 6c an. Die FIFO-Länge ist je nach Anforderung des Pufferspeichers geeignet zu wählen und hängt insbesondere auch vom Verhältnis der Datenübertragungsraten des schnellen und des langsamen Bussystemes 1, 2 ab. Die FIFO-Länge kann in einem FIFO-Längenregister anwenderspezifisch und somit auch flexibel, auch während eines Datentransfers, neu festgelegt werden. Über ein FIFO-Füllstandsregister kann identifiziert werden, welche der FIFO-Speicherobjekte 6c bereits beschrieben wurden und welche leer sind.

Darüber hinaus ist die Konfiguration mindestens eines Teiles des Speichers 6a als FIFO nicht ausschließlich bei einem Datentransfer zwischen einem langsamen und einem schellen Bussystem 1, 2 denkbar, sondern läßt sich im Rahmen der Erfindung auf jeglichen Datentransfer zwischen unterschiedlichen Busystemen 1, 2 mit gleichen oder unterschiedlichen Datenübertragungsraten vorteilhaft anwenden.

Insbesondere kann ein FIFO-Pufferspeicher vorteilhaft auch dann eingesetzt werden, wenn beispielsweise eines der Bussysteme 1, 2 kontinuierlich Daten sendet. Diese Daten können vom zweiten Bussystem 1, 2 gesammelt aus dem FIFO-Pufferspeicher ausgelesen und weiterverarbeitet werden. Auf diese Weise benötigt das zweite Bussystem 1, 2 für dieses gesammelte Auslesen aufgrund geringerer Zugriffszeiten eine geringere Rechenleistung der zentralen Recheneinheit 8. Es wäre auch denkbar, daß das Auslesen und Weiterverarbeiten der Daten über die beiden Bussysteme 1, 2 zwar gleich schnell erfolgt, jedoch die Abstände zwischen den Schreib/Lesezyklen unterschiedlich lang sind.

Die Funktionalität des erfindungsgemäßen Brückenmoduls ist datengesteuert, d.h. die spezielle Speicheraufteilung bestimmt die Funktionalität des Brückenmoduls. Die Daten werden hier nicht beliebig über den Speicher des Brückenmoduls hin und her kopiert, sondern es werden vielmehr die Daten innerhalb vorbestimmter Bereiche transferiert.

Die oben beschriebenen Ausführungsbeispiele zeigen bevorzugte und vorteilhafte Realisierung eines Brückenmoduls 3 zum Datentransfer zwischen verschiedenen Bussystemen. Die oben angegebenen Beispiele für vorteilhafte Alternativen sollen jedoch nicht als vollständig angesehen werden. Vielmehr ergeben sich selbstverständlich - eventuell weitere vorteilhafte - Alternativen sowie Kombinationen, die bei der Durchsicht der obigen Darstellung nahegeleget sind.

## Patentansprüche

1. Zwischen mindestens zwei Bussystemen (1, 2) geschaltetes Brückenmodul (3), das zum seriellen Datentransfer binärer Daten von einem der Bussysteme (1, 2) zu mindestens einem weiteren der Bussysteme (1, 2) geeignet ist,
**dadurch gekennzeichnet , daß**
zur Zwischenspeicherung der Daten bei einem Datentransfer eine einzige Speichereinrichtung (6) vorgesehen ist, wobei der Datentransfer in der Speichereinrichtung (6) datengesteuert ohne Zwischenschaltung einer Steuereinrichtung erfolgt.

2. Brückenmodul nach Anspruch 1,
**dadurch gekennzeichnet , daß**
jedes der mindestens zwei Bussysteme (1, 2) mindestens eine Teilnehmerstation (1b, 2b; 1b') aufweist, die zum Zwecke der Datenkommunikation untereinander an jeweils mindestens einem Datenbus (1a, 2a) angeschlossen sind und das Brückenmodul (3) in einer der Teilnehmerstationen (1b') integriert ist.

3. Brückenmodul nach Anspruch 2,
**dadurch gekennzeichnet , daß**
die das Brückenmodul (3) enthaltende Teilnehmerstation (1b') einen internen Speicher (9) aufweist und die Speichereinrichtung (6) des Brückenmoduls (3) Bestandteil des internen Speichers (9) ist.

4. Brückenmodul nach Anspruch 3,
**dadurch gekennzeichnet , daß**
die Speichergröße der Speichereinrichtung (6) frei konfigurierbar ist.

5. Brückenmodul nach einem der vorherigen Ansprüche,
**dadurch gekennzeichnet , daß**
das Brückenmodul (3) zwischen genau zwei Bussystemen (1, 2) angeordnet ist.

6. Brückenmodul nach einem der vorherigen Ansprüche,
**dadurch gekennzeichnet , daß**
die Daten auf einem ersten Datenbus (1a) eines ersten Bussystemes (1) mit einer höheren Datenübertragungsrate getrieben werden als auf einem zweiten Datenbus (2a) eines zweiten Bussystemes (2).

7. Brückenmodul nach einem der vorherigen Ansprüche,
**dadurch gekennzeichnet , daß**
mindestens ein Teil der Speichereinrichtung (6) als FIFO-Pufferspeicher konfigurierbar ist.

8. Brückenmodul nach einem der vorstehenden Ansprüche,
**dadurch gekennzeichnet ,**
**daß** die Speichereinrichtung (6) eine Vielzahl von Speicherobjekten (6c) aufweist, in denen zu übertragende Daten ablegbar bzw. abrufbar sind, wobei ein erster Teil der Speicherobjekte (6c) einem ersten Bussystem (1a, 2a) und ein zweiter Teil der Speicherobjekte (6c) einem zweiten Bussystem (1a, 2a) zugeordnet sind.

9. Brückenmodul nach Anspruch 8,
**dadurch gekennzeichnet ,**
**daß** zumindest ein Teil der Speicherobjekte (6c) dieselbe Größe aufweist.

10. Brückenmodul nach einem der Ansprüche 8 oder 9,
**dadurch gekennzeichnet ,**
**daß** die Zuordnung der Speicherobjekte (6c) zu den Bussystemen (1a, 2a) flexibel und individuell je nach gegebener Anforderung neu festlegbar ist.

11. Brückenmodul nach einem der Ansprüche 8 bis 10,
**dadurch gekennzeichnet ,**
**daß** ein Speicherobjekt (6c) folgende Bereiche aufweist:
- Einen Identifizierbereich (a) in dem eine Kennung und Steuerinformationen abgelegt sind,
- einen Datenbereich (b) in dem die zu transferierenden Daten zwischengespeichert sind, und
- einen Steuerbereich, der die Kontroll- und Steuerfunktionen für einen Datentransfer enthält.

12. Verfahren zum Betreiben einer Speichereinrichtung in einem Brückenmodul nach einem der vorstehenden Ansprüche,
**dadurch gekennzeichnet ,**
**daß** die Speichereinrichtung (6) eine Vielzahl von Speicherobjekten (6c) aufweist und daß ein Datentransfer objektweise durchgeführt wird, wobei über eine Kennung im Identifizierbereich eines zu übertragenden Datenpaketes festgelegt wird, in welches Speicherobjekt (6c) das Datenpaket abgelegt wird und welchem der Bussysteme (1a, 2a) das Datenpaket zugeordnet wird.

13. Verfahren nach Anspruch 12,
**dadurch gekennzeichnet ,**
**daß** bei einem Datentransfer Daten über das Brückenmodul (3) objektorientiert innerhalb vorbestimmter Speicherobjekte (6c) der Speichereinrichtung (6) transferiert werden.

14. CAN-Bussystem mit einem, zwischen mindestens zwei Bussystemen (1, 2) geschalteten Brückenmodul (3) nach einem der vorstehenden Ansprüche, welches zum seriellen Datentransfer binärer Daten von einem der Bussysteme (1, 2) zu mindestens einem weiteren der Bussysteme (1, 2) geeignet ist, wobei zur Zwischenspeicherung der Daten bei einem Datentransfer eine einzige Speichereinrichtung (6) vorgesehen ist, wobei der Datentransfer in der Speichereinrichtung (6) datengesteuert ohne Zwischenschaltung einer Steuereinrichtung erfolgt.

15. Kraftfahrzeugbordnetzsystem mit mindestens einem CAN-Bussystem nach Anspruch 14,
wobei ein CAN-Bussystem ein, zwischen mindestens zwei Bussystemen (1, 2) geschaltetes Brückenmodul (3) enthält, welches zum seriellen Datentransfer binärer Daten von einem der Bussysteme (1, 2) zu mindestens einem weiteren der Bussysteme (1, 2) geeignet ist, wobei zur Zwischenspeicherung der Daten bei einem Datentransfer eine einzige Speichereinrichtung (6) vorgesehen ist, wobei der Datentransfer in der Speichereinrichtung (6) datengesteuert ohne Zwischenschaltung einer Steuereinrichtung erfolgt.

## Claims

1. Bridge module (3) which is connected between at least two bus systems (1, 2) and is suitable for serial data transfer of binary data from one of the bus systems (1, 2) to at least one other of the bus systems (1, 2)
**characterized in that**
a single memory device (6) is provided for buffer storage of the data during a data transfer, the data transfer in the memory device (6) being carried out under data control without the interposition of a control device.

2. Bridge module according to Claim 1,
**characterized in that**
each of the at least two bus systems (1, 2) has at least one subscriber station (1b, 2b; 1b') which, for the purpose of data communication with one another, are each connected to at least one data bus (1a, 2a) and the bridge module (3) is integrated in one of the subscriber stations (1b').

3. Bridge module according to Claim 2,
**characterized in that**
the subscriber station (1b') which contains the bridge module (3) has an internal memory (9), and the memory device (6) of the bridge module (3) is part of the internal memory (9).

4. Bridge module according to Claim 3,
**characterized in that**
the memory size of the memory device (6) is freely configurable.

5. Bridge module according to one of the preceding claims,
**characterized in that**
the bridge module (3) is arranged between two, and only two, bus systems (1, 2).

6. Bridge module according to one of the preceding Claims,
**characterized in that**
the data on a first data bus (1a) of a first bus system (1) are driven at a higher data transmission rate than on a second data bus (2a) of a second bus system (2).

7. Bridge module according to one of the preceding claims,
**characterized in that**
at least a part of the memory device (6) is configurable as a FIFO buffer store.

8. Bridge module according to one of the preceding claims,
**characterized in that**
the memory device (6) has a large number of memory objects (6c) in which data to be transmitted can be stored and can be called up, in which case a first portion of the memory objects (6c) is associated with a first bus system (1a, 2a) and a second portion of the memory objects (6c) is associated with a second bus system (1a, 2a) .

9. Bridge module according to Claim 8,
**characterized**
**in that** at least some of the memory objects (6c) are of the same size.

10. Bridge module according to one of Claims 8 or 9,
**characterized in that**
the association between the memory objects (6c) and the bus systems (1a, 2a) is flexible and can be redefined individually in accordance with the given requirement.

11. Bridge module according to one of Claims 8 to 10,
**characterized in that**
a memory object (6c) has the following areas:
- an identification area (a) in which an identifier and control information are stored,
- a data area (b) in which the data to be transferred is temporarily stored, and
- a control area which contains the monitoring and control functions for a data transfer.

12. Method for operation of a memory device in a bridge module according to one of the preceding claims,
**characterized in that**
the memory device (6) has a large number of memory objects (6c) and **in that** a data transfer is carried out on an object-by-object basis, with an identifier in the identification area of a data packet to be transmitted being used to define the memory object (6c) in which the data packet is stored and the bus systems (1a, 2a) with which the data packet is associated.

13. Method according to Claim 12,
**characterized in that**,
during a data transfer, data is transferred via the bride module (3) on an object-by-object basis within predetermined memory objects (6c) in the memory device (6).

14. CAN bus system having a bridge module (3) which is connected between at least two bus systems (1, 2), according to one of the preceding claims, which is suitable for serial data transfer of binary data from one of the bus systems (1, 2) to at least a further one of the bus systems (1, 2), with a single memory device (6) being provided for temporary storage of the data during a data transfer, and with the data transfer being carried out in the memory device (6) on a data-controlled basis without the interposition of a control device.

15. Motor vehicle power supply system having at least one CAN bus system according to Claim 14,
in which a CAN bus system contains a bridge module (3) which is connected between at least two bus systems (1, 2) and is suitable for serial data transfer of binary data from one of the bus systems (1, 2) to at least a further one of the bus systems (1, 2), with a single memory device (6c) being provided for temporary storage of the data during a data transfer, and with the data transfer in the memory device (6) being carried out on a data-controlled basis without the interposition of a control device.

## Revendications

1. Module de pont (3) couplé entre au moins deux systèmes de bus (1, 2) et approprié pour transférer en série des données binaires de l'un des systèmes de bus (1,2) vers au moins un autre des systèmes de bus (1, 2),
**caractérisé en ce qu'**
un seul organe de mémoire (6) est prévu pour la mémorisation intermédiaire des données lors d'un transfert de données, ce transfert dans l'organe de mémoire (6) étant commandé par les données sans couplage intermédiaire avec un module de commande.

2. Module de pont selon la revendication 1,
**caractérisé en ce que**
chacun des deux systèmes de bus minimums (1, 2) présente au moins un poste utilisateur (1b, 2b ; 1b') raccordé à chaque fois à au moins un bus de données (1a, 2a) dans le but de communiquer des données entre eux, et le module de pont (3) est intégré dans l'un des postes utilisateurs (1b').

3. Module de pont selon la revendication 2,
**caractérisé en ce que**
le poste utilisateur (1b') contenant le module de pont (3) présente une mémoire interne (9) et l'organe de mémoire ( 6) du module de pont (3) est un constituant de la mémoire interne (9).

4. Module de pont selon la revendication 3,
**caractérisé en ce que**
la taille de la mémoire de l'organe de mémoire (6) peut être configurée librement.

5. Module de pont selon l'une des revendications précédentes,
**caractérisé en ce que**
le module de pont (3) est disposé précisément entre deux systèmes de bus (1, 2).

6. Module de pont selon l'une des revendications précédentes,
**caractérisé en ce que**
les données présentes sur un premier bus de données (1a) d'un premier système de bus (1) sont entraînées à une vitesse de transmission plus élevée que sur un deuxième bus de données (2a) d'un deuxième système de bus (2).

7. Module de pont selon l'une des revendications précédentes
**caractérisé en ce qu'**
au moins une partie de l'organe de mémoire (6) peut être configurée sous la forme d'une mémoire tampon FIFO (premier entré premier sorti).

8. Module de pont selon l'une des revendications précédentes,
**caractérisé en ce que**
l'organe de mémoire (6) présente une multitude d'objets de mémorisation (6c) dans lesquels peuvent être déposées ou retirées les données qui doivent être transmises, une première partie des objets de mémorisation (6c) étant affectée à un premier système de bus (1a, 2a) et une deuxième partie des objets de mémorisation (6c) à un deuxième système de bus (1a, 2a).

9. Module de pont selon la revendication 8,
**caractérisé en ce qu'**
au moins une partie des objets de mémorisation (6c) présente la même taille.

10. Module de pont selon l'une des revendications 8 ou 9,
**caractérisé en ce que**
l'affectation des objets de mémorisation (6c) aux systèmes de bus (1a, 2a) peut être redéfinie individuellement et de manière souple en fonction des exigences données.

11. Module de pont selon l'une des revendications 8 à 10,
**caractérisé en ce qu'**
un objet de mémorisation (6c) présente les zones suivantes :
- une zone d'identification (a) dans laquelle sont déposées une identification et des informations de commande,
- une zone de données (b) dans laquelle sont mémorisées de manière intermédiaire les données qui doivent être transférées, et
- une zone de commande contenant les fonctions de contrôle et de commande pour un transfert de données.

12. Procédé de gestion d'un organe de mémoire dans un module de pont selon l'une des revendications précédentes,
**caractérisé en ce que**
l'organe de mémoire (6) présente une multitude d'objets de mémorisation (6c) et **en ce qu'**un transfert de données est effectué par ces objets, et on définit, par le biais d'une identification dans la zone d'identification d'un paquet de données à transmettre, dans quel objet de mémorisation (6c) ce paquet de données est déposé et à lequel des systèmes de bus (1a, 2a) est affecté ce paquet de données.

13. Procédé selon la revendication 12,
**caractérisé en ce que**
pendant un transfert de données, les données sont transférées, par le biais du module de pont (3), en étant orientées vers des objets présents dans les objets de mémorisation (6c) prédéfinis de l'organe de mémoire (6) .

14. Système de bus CAN comprenant un module de pont (3) couplé entre au moins deux systèmes de bus (1, 2) selon l'une des revendications précédentes et approprié pour transférer en série des données binaires de l'un des systèmes de bus (1, 2) vers au moins un autre des systèmes de bus (1, 2), un seul organe de mémoire (6) étant prévu pour la mémorisation intermédiaire des données lors d'un transfert de données, ce transfert dans l'organe de mémoire (6) étant commandé par les données sans couplage intermédiaire avec un module de commande.

15. Système de réseau embarqué d'un véhicule automobile comprenant au moins un système de bus CAN selon la revendication 14,
dans lequel
un système de bus CAN contient un module de pont (3) couplé entre au moins deux systèmes de bus (1, 2) et approprié pour transférer en série des données binaires de l'un des systèmes de bus (1, 2) vers au moins un autre des systèmes de bus (1, 2), un seul organe de mémoire (6) étant prévu pour la mémorisation intermédiaire des données lors d'un transfert de données, ce transfert dans l'organe de mémoire (6) étant commandé par les données sans couplage intermédiaire avec un module de commande.
